# EUROPÄISCHE PATENTSCHRIFT

(11) **EP 1 877 172 B1**
(45) Veröffentlichungstag und Bekanntmachung des Hinweises auf die Patenterteilung: **03.02.2010**
(21) Anmeldenummer: 06723655.4
(22) Anmeldetag: 23.03.2006
(51) Int. Cl.: B01J 8/00, B01J 8/06

(54) **BESCHICKUNGSVORRICHTUNG FÜR ROHRBÜNDELREAKTOREN**
FEEDING DEVICE FOR BUNDLED TUBE REACTOR
DISPOSITIF D'ALIMENTATION POUR REACTEURS A FAISCEAU TUBULAIRE

(30) Priorität: 24.03.2005 DE 102005013845
(43) Veröffentlichungstag der Anmeldung: 16.01.2008
(73) Patentinhaber: SÜD-CHEMIE AG, 80333 München (DE)
(72) Erfinder: HOFFMANN, Michael, China World Apart., Beijing 100004 (CN); NARDINI, Renzo, I-13100 Vercelli (IT)
(74) Vertreter: Gritschneder, Martin
(86) Internationale Anmeldenummer: PCT/EP2006/002664
(87) Internationale Veröffentlichungsnummer: WO 2006/100070

(56) Entgegenhaltungen:
- WO-A-93/08907
- DE-A1- 19 934 324
- US-A- 4 402 643
- US-A- 5 897 282
- US-A- 6 032 828

## Beschreibung

Die Erfindung betrifft eine Beschickungsvorrichtung für Rohrbündelreaktoren, gemäß dem Oberbegriff von Anspruch 1.

Das Befüllen der Rohre von Rohrbündelreaktoren erfordert regelmäßig das Einbringen von körnigen Feststoffen. Seit langem ist es bekannt, dass angesichts der Vielzahl von sich parallel erstreckenden Rohren eine maschinelle Unterstützung für das Befüllen wünschenswert wäre. Ein Beispiel für einen Rohrbündelreaktor ist bereits aus der US-PS 2,070,868 ersichtlich. Bereits dort wird die möglichst gleiche Strömungsgeschwindigkeit der parallelen Rohre angesprochen. Um ein akzeptables Reaktionsergebnis zu erzielen, sollte das Befüllen möglichst gleichmäßig erfolgen. Um dies zu erreichen, muss beim automatischen Befüllen (vgl. z. B. US-PS 3,913,806) häufig manuell nachgearbeitet werden. Nach Möglichkeit sollte eine Brückenbildung vermieden werden; ein vergleichsweise langsames und vorsichtiges Einschütten ist erwünscht.

In dem letzten Jahrzehnt wurden jedoch durchaus auch große Reaktoren mit beispielsweise 20.000 oder 40.000 Rohren realisiert. Beim vorsichtigen manuellen Einschütten muss mit einem signifikanten Zeitbedarf gerechnet werden; nachdem der Platz oberhalb eines Reaktors meist begrenzt ist, können auch nicht beliebig viele Bediener gleichzeitig arbeiten. Jedenfalls ist das manuelle Befüllen eines Reaktors ausgesprochen zeitintensiv. Neben den Lohnkosten muss der Betreiber mit teuren Stillstandzeiten für das Befüllen rechnen.

Es sind daher zahlreiche Versuche unternommen worden, das Befüllen zu automatisieren. Um zu gewährleisten, dass stets die gleichen Füllmengen in jedes Rohr eingefüllt werden, wurden Waagen eingesetzt, wobei beispielhaft auf die DE-A1 30 20 845 zu verweisen ist. Bei dieser Lösung wird eine Dosierbandwaage eingesetzt, um zu gewährleisten, dass gleiche Füllmengen bei den Rohren vorliegen.

Aufgrund der körnigen Konsistenz des Füllmaterials, das meist ein katalytisch beschichtetes Trägermaterial ist, entstehen jedoch auch bei einer derartigen, bereits recht aufwändigen Lösung Probleme. Die einzelnen Füllmaterialpartikel lagern sich aneinander an, so dass es zu ungleichförmigen Befüllungen kommt.

Vielfach erfordern Rohrbündelreaktoren die Einbringung von unterschiedlichen Füllmaterialien oder Katalysatoren in die Rohre des Rohrbündels. Diese unterschiedlichen Füllmaterialien weisen teilweise unterschiedliche Konsistenzen auf, regelmäßig aber jedenfalls eine unterschiedliche Füllmenge. Hierbei ist es dann wichtig, dass nicht nur das gesamte Rohr des Rohrbündelreaktors in der richtigen Füllhöhe und Verdichtung gefüllt ist, sondern dass in jedem Rohr das betreffende Füllmaterial in der je gewünschten Menge vorliegt. Häufig müssen beispielsweise drei oder vier verschiedene Füllmaterialien nacheinander eingebracht werden.

Um dennoch die entsprechenden Füllhöhen gewährleisten zu können, ist es vorgeschlagen worden, lediglich eine Teilbefüllung der Dosierkammern je vorzunehmen. Bei Teilbefüllungen lässt sich jedoch die Füllhöhe der Dosierkammmern selbst schlecht kontrollieren.

Eine weitere vorgeschlagene Möglichkeit besteht darin, mit recht kleinen Dosierkammern zu arbeiten und Mehrfachbefüllungen vorzunehmen. Wenn beispielsweise die drei Füllmaterialien im Verhältnis 3:5:1 in die Rohre des Rohrbündelreaktors eingefüllt werden sollen, wird zunächst die betreffende Dosierkammer dreimal mit dem ersten Material befüllt und entleert, dann fünfmal mit dem zweiten Material und dann einmal mit dem dritten Material. Dieses Verfahren ist jedoch ausgesprochen zeitaufwendig, ähnlich wie das manuelle Befüllen, so dass es sich nicht durchgesetzt hat.

Ferner ist es auch bereits vorgeschlagen worden, die Dosierkammern selbst mit vorportionierten Füllmaterialienmengen zu beschicken. Auch dieses Verfahren ist vergleichsweise teuer und hat sich dementsprechend nicht durchgesetzt.

Ferner ist aus der US-PS 5 890 868 ein auf Schienen verfahrbarer Dosierwagen bekannt geworden, der nach Befüllen aus einem Vorratsbehälter die entsprechende Dosierung vornimmt. Die Befüllung der einzelnen Kammern der Dosierwagens erfolgt über einen schwenkbar aufgehängten und von einem Pneumatik-Zylinder betätigbaren Schieber, wobei die unterschiedliche Höhe durch eine Höhenverstellung des Zustelltrichters ausgeglichen werden soll. Diese Lösung ist für Mehrfachbefüllung von Rohren im Grunde schlecht geeignet, insbesondere wenn unterschiedliche Höhen pro Füllmaterial realisiert werden sollen.

Zudem entsteht bei einer derartigen Beschickungsvorrichtung ein unterschiedlicher Verdichtungsgrad in den einzelnen Rohren des Rohrbündelreaktors, da die Füllmaterialpartikel beim Fallen in die Rohre dazu neigen, sich in unterschiedlicher Weise aneinander anzulagern. Dementsprechend ist der Durchströmungswiderstand ebenfalls unterschiedlich, was dazu führt, dass durch den unterschiedlichen Differenzdruckverlust in den einzelnen Rohren des Rohrbündelreaktors unterschiedliche Reaktionszeiten entstehen. Die Qualität des erzeugten Reaktionsprodukts sinkt damit deutlich.

Um dies zu verhindern, erfolgt üblicherweise ein manuelles Nacharbeiten, das zeitlich zumindest von der Größenordnung her gleich aufwendig wie das manuelle Befüllen ist, oder es wird die schlechte Qualität des Reaktionsproduktes in Kauf genommen.

Die US 5,987,282 offenbart eine Beschickungsvorrichtung für Rohrbündelreaktoren zur effizienten und präzisen Handhabung von katalytischem Füllmaterial. Das katalytische Material wird mit Hilfe einer Dosiervorrichtung die eine Vielzahl von Dosierkammern aufweist aus Vorratsbehältern entnommen, und dann über eine Anordnung von Beschickungstrichtern und Rüttelrutschen in die jeweiligen Katalysereaktoren transportiert. Die Beschickungsvorrichtung gewährleistet, dass alle Reaktoren mit identischen Ausgangsstoffen versorgt werden.

### Aufgabenstellung

Der vorliegenden Erfindung liegt die Aufgabe zugrunde, Rohrbündelreaktoren mit unterschiedlichen Mengen von zwei oder mehr Füllmaterialien zu beladen, wobei Verwechslungen der Füllmaterialien vermieden werden sollen.

Diese Aufgabe wird erfindungsgemäß durch Anspruch 1 gelöst. Vorteilhafte Weiterbildungen ergeben sich aus den Unteransprüchen.

Die erfindungsgemäße Beschickungsvorrichtung für Rohrbündelreaktoren zeichnet sich zunächst durch die Realisierung von Dosierkammern aus, von denen aus sich ein Fallrohr oder eine andere Zuführvorrichtung nach unten erstreckt. Erfindungsgemäß sind die Dosierkammern je über Vorkammern befüllbar, die in einer austauschbaren Vorkammereinheit zusammengefasst sind. Damit wird die Möglichkeit eröffnet, in Abhängigkeit von der gewählten Vorkammereinheit entsprechend unterschiedliche Füllhöhen bereits in den Dosierkammern exakt bereitzustellen. Durch die Entleerung in die Rohre, bevorzugt über eine Rüttler, lässt sich eine gleichmäßige Verdichtung der Füllmaterialien sicherstellen, wobei in vorteilhafter Ausgestaltung der Erfindung eine Dichtlippe als Austraglippe vorgesehen ist, die mit dem Boden der Dosierkammer zusammen wirkt und dort die erwünschte Vereinzelung der Partikel des Füllmaterials gewährleistet.

Hierbei kommt der Austragslippe ihre Vergleichmäßigungswirkung zugute, die elastisch die ausgetragene Schichthöhe oder Volumenstromhöhe begrenzt.

Erfindungsgemäß lässt sich hierzu eine begrenzte Scherwirkung einsetzen, die sich zwischen den sich elastisch gegeneinander bewegenden Oberflächen der Dosiervorrichtung zwischen Rüttelboden und Austragslippe ergibt. Die Scherwirkung lässt sich erfindungsgemäß besonders günstig für die Vereinzelung der Partikel des Füllmaterials einsetzen, ohne dass jedoch Partikelteile herausbrechen oder abgeschlagen würden. Vielmehr wirkt die erfindungsgemäße Austragslippe recht sanft und ist so elastisch, dass sie sich an das Förderprofil des ausgetragenen Trägermaterials anschmiegt.

Erfindungsgemäß ist es vorgesehen, mit einer Wählvorrichtung die gewünschte Vorkammereinheit vorzuwählen. Die Wählvorrichtung ist mit einer Codierung kombiniert, die verhindert, dass versehentlich die falsche Vorkammereinheit verwendet wird. Ein Schieber, der die Möglichkeit bietet, den Inhalt der Vorkammern in die Dosierkammern hier zu entleeren, lässt sich in besonders günstiger Ausgestaltung lediglich dann betätigen, wenn die Stellung der Wählvorrichtung, also beispielsweise eines Wahlhebels, und die entsprechende Vorkammereinheit oder Kassette miteinander übereinstimmen.

Erfindungsgemäß ist es auch günstig, wenn das Fördergut nicht im freien Fall in die Rohre gelangt, sondern über die beispielsweise auch schräg angeordneten Fallrohre den Rohren des Rohrbündelreaktors zugeführt wird. Durch den Schrägstellungswinkel der Fallrohre kann die Austrittsgeschwindigkeit des Füllmaterials in weiten Bereichen an die Erfordernisse angepasst werden.

Überraschend ergibt sich mit der erfindungsgemäßen Beschickungsvorrichtung eine deutlich gleichmäßigere Befüllung der Reaktorrohre. Erstmals ist nun das manuelle Nacharbeiten praktisch nicht mehr erforderlich, auch wenn hohe Ansprüche an die Gleichmäßigkeit der Füllung und damit an die Qualität des Reaktionsprodukts gestellt werden.

In günstiger Ausgestaltung der Erfindung ist es vorgesehen, die Vorkammern zunächst gemeinsam mit Füllmaterial zu befüllen, die dann durch die Betätigung eines Schiebers oder einer Absperrvorrichtung gemeinsam in die Dosierkammern entleert werden. Durch diese Maßnahme ergibt sich das gleiche Füllvolumen für jede Dosierkammer. Unabhängig hiervon ist es erfindungsgemäß jedoch besonders bedeutsam, dass durch die schonende Beschickung das Abstoßen von Teilpartikeln oder Körnern des Füllmaterials vermieden wird.

Erfindungsgemäß besonders günstig ist es, wenn die Vorkammereinheit als verschlossene Füllkassette vorliegt. Über einen Schieber, der nach der Art einer Schublade geführt ist und die Vorkammereinheit verschließt, ist ein sicherer Transport gewährleistet.

Erfindungsgemäß ist es besonders günstig, dass durch die Betätigung des Schiebers das Füllmaterial aus allen Vorkammern gleichzeitig in alle Dosierkammern fällt. Damit liegt praktisch eine Art Vorportionierung vor, ohne dass dies einen Vorbearbeitungsaufwand erfordert. Anschließend hieran lässt sich nun kurzerhand die nächste Vorkammereinheit mit dem nächsten gewünschten Füllmaterial auf die Dosierkammereinheit aufsetzen. Bevorzugt wird die zu befüllende Rohrreihe des Rohrbündelreaktors nun bereits beschickt, indem der Rüttler betätigt wird und hierdurch das Füllmaterial über den schrägen Boden - gebremst durch die Austragslippe - in die betreffenden Rohre eingeführt wird. Es versteht sich, dass hierbei die Befüllungsgeschwindigkeit und damit die Schüttdichte beispielsweise durch Einstellung der Rüttelstärke oder Rüttelgeschwindigkeit des pneumatischen Rüttlers einstellbar ist.

Sobald das erwünschte Befüllen stattgefunden hat, wird der Schieber der Vorkammereinheit erneut gezogen, so dass das Füllmaterial der nächsten Art in die Dosierkammern gelangt, bis sämtliche unterschiedlichen Vorkammereinheiten und Füllmaterialien für die betreffende Rohrreihe eingeführt sind.

Erfindungsgemäß ist es besonders günstig, dass die erfindungsgemäße Beschickungsvorrichtung sich selbsttätig auf der Oberseite des Rohrbündelreaktors bewegen kann. Hierzu sind zwei geeignete Zapfen vorgesehen, die in Rohre eingreifen und über welche die Beschickungsvorrichtung sich im Rastermaß der Rohre vorwärts bewegt, so dass nach Befüllung einer Reihe umgehend die nächste Reihe von Rohren angesteuert werden kann.

Erfindungsgemäß ist es besonders günstig, dass sich bei Mehrlagenkatalysatorsystemen die Aktivitäten der einzelnen Katalysatorlagen dem Reaktionsverlauf entlang der Reaktorachse anpassen lassen. Dadurch ist es möglich, eine hohe Ausbeute am Wertprodukt und gleichzeitig eine möglichst geringe Ausbildung von unerwünschten Zwischenprodukten zu erzielen.

Die Erfindung ist nicht auf die Verwendung bestimmter Füllmaterialien beschränkt. Die Füllmaterialpartikel können zum Beispiel im Form von Ringen, Kugeln, Tabletten, gelochten Tabletten, Trilobes, gelochten Trilobes, Sternsträngen, Sterntabletten, Wagenrädern, Extrudaten, Pillen oder Zylindern oder granulärem Material ausgebildet sein, wobei sowohl Vollkatalysatormaterial als auch katalytisch beschichtetes Trägermaterial eingesetzt werden kann. Im Fall von katalytisch beschichtetem Trägermaterial kommen als Trägermaterial beispielsweise Siliziumcarbid oder Steatit als bevorzugte Materialien, aber auch Quarz, Porzellan, SiO₂, Al₂O₃ oder Tonerde in Frage.

Mit derartigen Rohrbündelreaktoren lassen sich verschiedene Wertprodukte herstellen, beispielsweise Phthalsäureanhydrid, Maleinsäureanhydrid, Formaldehyd, Acrolein, Acrylsäure, Methacrylsäure, Acrylnitril, Glyoxal, Ethylenoxid, Vinylchlorid, Vinylacetat, Oxoalkohole, Styrol. Der Rohrbündelreaktor lässt sich auch für die Selektivhydrierung von Alkinen und Dienen z.B. in olefinischen Strömen einsetzen.

Weitere Einzelheiten, Vorteile und Merkmale ergeben sich aus der nachfolgenden Beschreibung eines Ausführungsbeispiels der Erfindung anhand der Zeichnungen.

Es zeigen:
- Fig. 1: eine perspektivische Darstellung eines Teils einer erfin- dungsgemäßen Beschickungsvorrichtung, nämlich der Dosierka- mereinheit;
- Fig. 2: eine perspektivische Darstellung eines weiteren Teils einer erfindungsgemäßen Beschickungsvorrichtung in einer Ausführungsform, nämlich einer Vorkammereinheit;
- Fig. 3: eine perspektivische Darstellung einer anderen Aus- führungsform einer Vorkammereinheit gemäß Fig. 2;
- Fig. 4: einen Schnitt durch eine erfindungsgemäße Beschickungs- vorrichtung; und
- Fig. 5: eine Draufsicht auf einen Rohrbündelreaktor für die Beschickungsvorrichtung, wobei die Beschickungsvorrich- tung schematisch dargestellt ist.

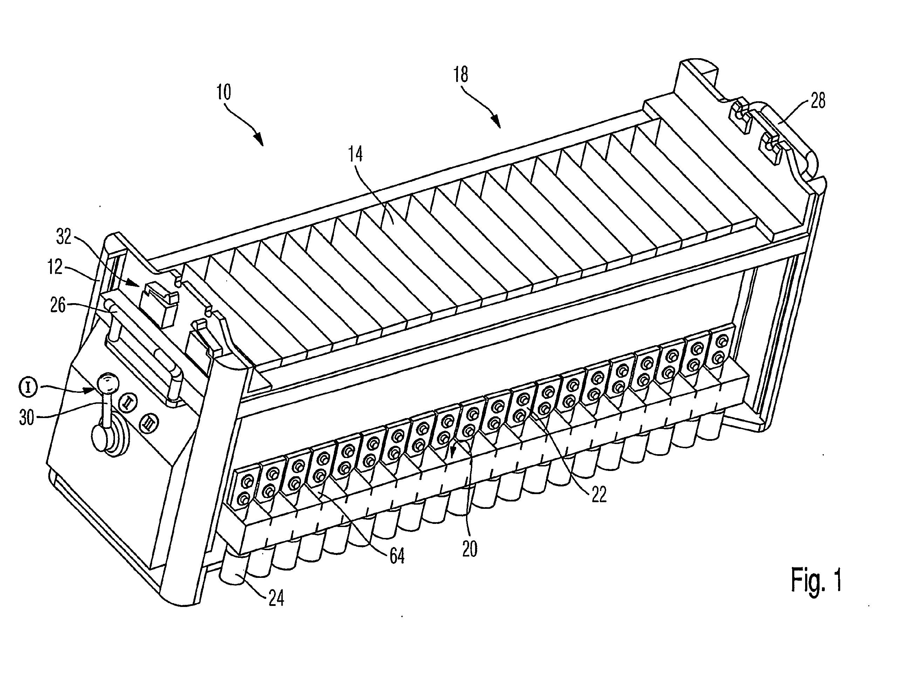

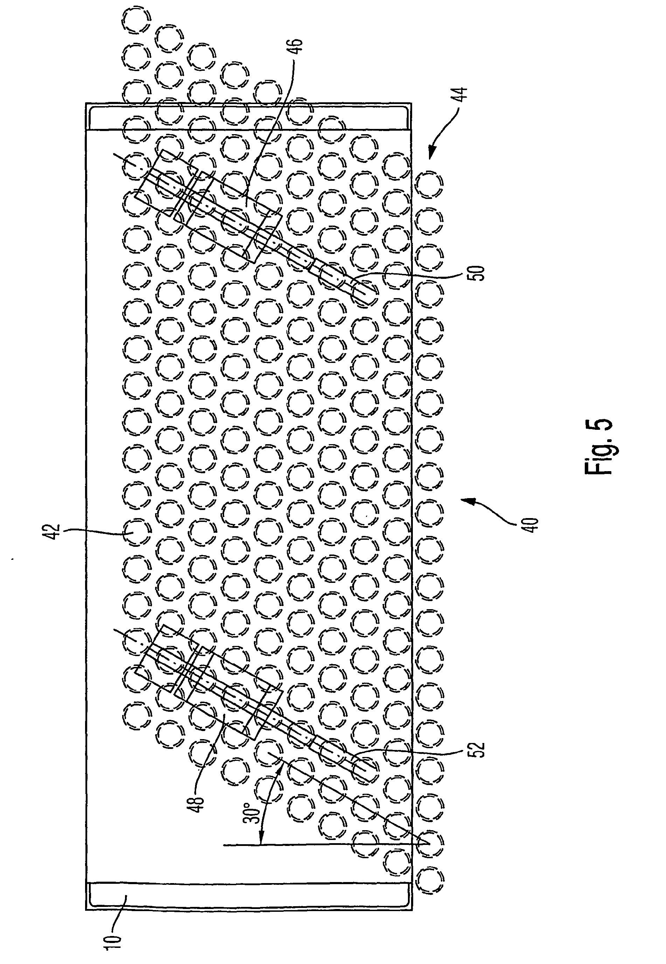

Die in Fig. 1 dargestellte Beschickungsvorrichtung 10 weist einen Rahmen 12 auf, der eine Vielzahl von Dosierkammern 14, die zu einer Dosierkammereinheit 18 zusammengefasst sind, trägt. Auslassseitig der Dosierkammern 14 sind die Fallrohre 24 vorgesehen, die dafür bestimmt sind, oberhalb von Rohren eines Rohrbündelreaktors Fig. 5 zu enden. Die Fallrohre 24 weisen dementsprechend einen etwas geringeren Durchmesser als die Rohre des Rohrbündelreaktors auf.

Die Dosierkammern 14 haben eine Breite, die im Wesentlichen der eines Fallrohrs entspricht. Es sind im Beispielsfall 20 Dosierkammern 14 nebeneinander vorgesehen, wobei es sich versteht, dass diese Anzahl in weiten Bereichen an die Erfordernisse anpassbar ist. Auslassseitig weist jede Dosierkammer eine Austragslippe 64 auf, die nach der Art einer Schürze in einen Auslasskanal 20 der Dosierkammer hineinragt. Über eine Halteplatte 22 ist jede Austragslippe 64 verstellbar in dem Auslasskanal 20 gelagert.

Die Dosierkammereinheit 18 weist an ihren Stirnseiten je einen Handgriff 26 und 28 auf, über den sie beispielsweise auf die Oberseite des Rohrbündelreaktors aufbringbar ist. Ferner ist ein Wählhebel 30 vorgesehen, der Teil einer Wählvorrichtung ist, über die hier zu verwendendes Füllmaterial wählbar ist. Der Wählhebel weist drei Stellungen, I, II und III auf. Er wirkt in Verbindung mit einer Codierung 32 beim Aufsetzen der zugehörigen Vorkammereinheit. Hier ist die Codierung 32 über Mikroschalter dargestellt, wobei es sich versteht, dass eine beliebige andere Codierung ebenfalls möglich ist.

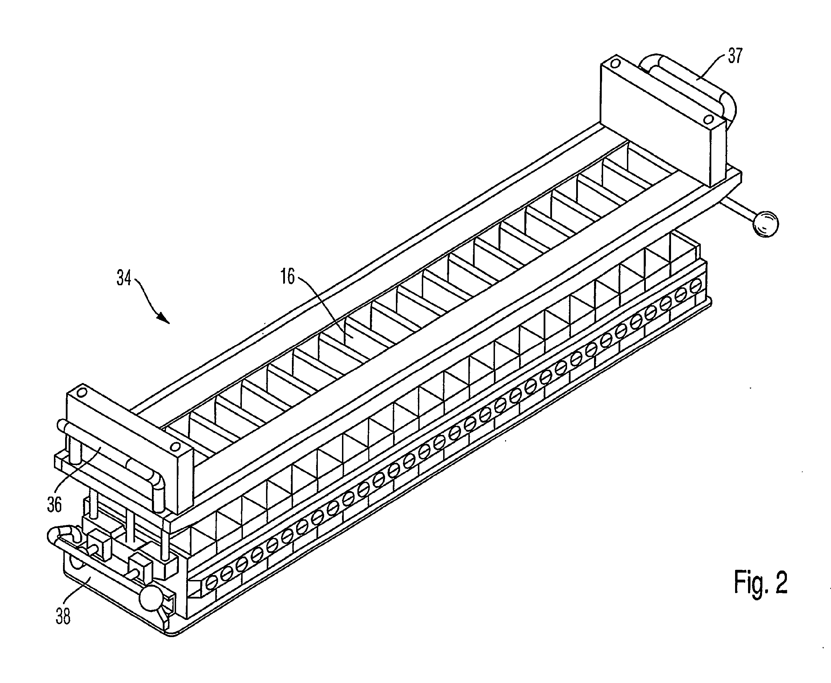

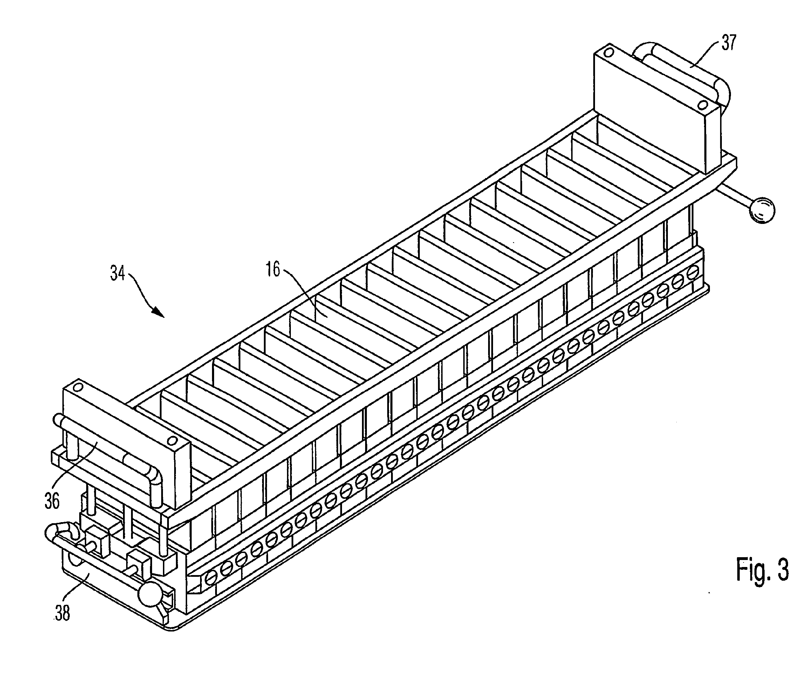

Eine Vorkammereinheit 34 ist aus Fig. 2 ersichtlich. Die Vorkammereinheit weist eine Vielzahl von Vorkammern 16 auf, entsprechend der Anzahl der Dosierkammern 14, und ist dazu bestimmt, auf die Dosierkammereinheit 18 aufgesetzt zu werden. Auch sie weist Handgriffe 36 und 37 auf. An ihrem unteren Ende ist sie mit einem schematisch dargestellten Schieber 38 verschlossen. Durch die Codierung 32 ist die Betätigung des Schiebers 38 lediglich dann möglich, wenn der Wählhebel 30 in der zu der Vorkammereinheit 34 passenden Stellung ist. Wie aus Fig. 2 ersichtlich ist, ist bei dieser Ausführungsform der Vorkammereinheit die Länge jeder Vorkammer 16 geringer als die Länge einer Dosierkammer 14, so dass ein entsprechend geringeres Vorfüllvolumen bereitgestellt wird. Dies stellt einen Unterschied zu der Vorkammereinheit 34 gemäß Fig. 3 dar, bei der das volle Volumen bereitgehalten wird. Auf diese Weise lassen sich unterschiedliche Mengen von Füllmaterialien je nach Wunsch des Benutzers vordosieren.

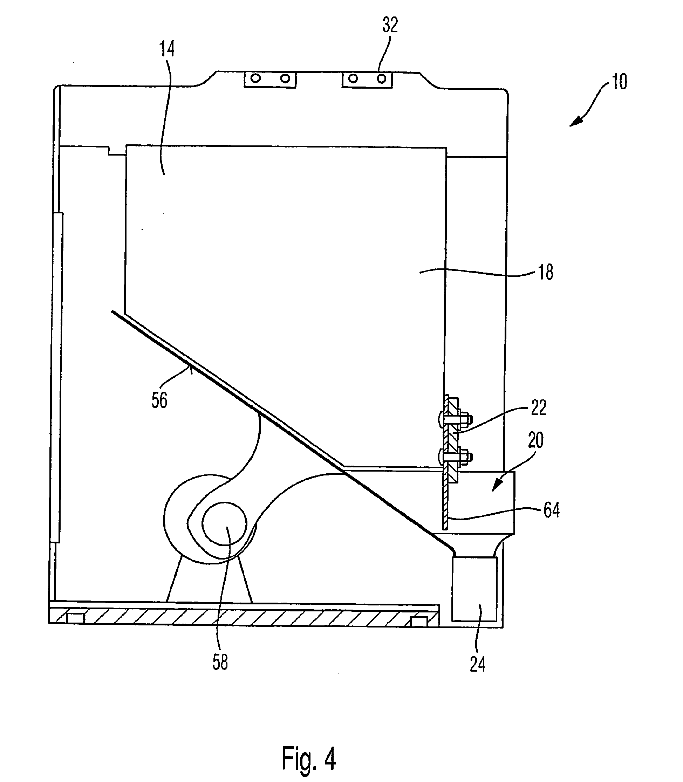

Aus Fig. 4 ist ersichtlich, in welcher Weise eine Beschickungsvorrichtung 10 im Schnitt aufgebaut sein kann. Die Dosierkammereinheit 18 weist in Zeichnungsebene hintereinander angeordnete Dosierkammern 14 auf. Jede Dosierkammer ist mit einem schrägen Boden 56 unten abgeschlossen, wobei der Boden 56 durchgehend ausgebildet ist, so dass er allen Dosierkammern 14 gemeinsam ist. Er ist mit einem schematisch dargestellten Rüttler 58 verbunden, so dass Füllmaterial dazu neigt, auch dann nach unten zur Austragslippe 64 hin zu wandern, wenn es sich um grobkörniges Füllmaterial handelt. In Fig. 4 ist auch der im Schnitt U-förmige Auslasskanal 20 dargestellt. Bevorzugt lässt sich hier körniges, katalytisch beschichtetes Trägermaterial oder Vollkatalysatormaterial einsetzen, wobei jedes Füllmaterialpartikel die Form eines Rings, einer Tablette oder einer Scheibe haben kann. In an sich bekannter Weise ergibt sich durch diese Formgebung eine vergleichsweise große Katalysatoroberfläche, wobei es sich versteht, dass anstelle dessen auch kugelförmige Trägermaterialpartikel eingesetzt werden können.

Die Beschickungsvorrichtung 10 ist knapp oberhalb eines Rohrbündelreaktors 40 angeordnet, der aus Fig. 5 schematisch ersichtlich ist. Der Rohrbündelreaktor 40 weist eine Vielzahl von vertikal verlaufenden Rohren 42 auf, die in zueinander versetzten Reihen angeordnet sind und mit dem Füllmaterial zu befüllen sind. Eine betrachtete Reihe 44 kann beispielsweise 20 Rohre aufweisen, und die Beschickungsvorrichtung 10 weist entsprechend hierzu 20 Vorkammern 16, 20 Dosierkammern 14 und auch entsprechende Fallrohre 24 im gleichen Rastermaß auf, so dass eine Reihe 44 in einem Zuge befüllbar ist, auch dann, wenn mehrere unterschiedliche Füllmaterialien nacheinander verwendet werden.

Aufgrund des Versatzes der Rohrreihen gegeneinander ist es bevorzugt, den Vortrieb der Beschickungsvorrichtung in Versatzrichtung vorzunehmen. In dem dargestellten Ausführungsbeispiel beträgt die Versatzrichtung 30°. Zur Bereitstellung des Vorschubs sind zwei Schubzylinder 46 und 48 vorgesehen, die je an der Beschickungsvorrichtung 10 gelagert sind und sich an gegenüber dem Reaktor wirkenden zapfen oder Stützen 50 und 52 abstützen.

Wenn eine Reihe 44 befüllt ist, erfolgt ein Vorschub um ein Rastermaß der Rohre 42 des Rohrbündelreaktors, so dass die nächste Reihe befüllt werden kann.

Es versteht sich, dass in der Praxis ein Rohrbündelreaktor eine wesentlich größere Anzahl als 20 Rohre in einer Reihe nebeneinander haben kann. Dementsprechend kann auch die Beschickungsvorrichtung 10 mit einer wesentlich größeren Anzahl von Dosierkammern usw. ausgerüstet sein, wobei es allerdings bei einem großen Rohrbündelreaktor vorgesehen ist, die Beschickungsvorrichtung mehrfach nebeneinander, bevorzugt etwas versetzt zueinander, einzusetzen, und so schräge Rohrbündelstreifen Zug um Zug zu befüllen. Es versteht sich, dass an-stelle dessen auch der Einsatz mehrerer Beschickungsvorrichtungen für die Befüllung eines großen Rohrbündelreaktors möglich ist.

Die erfindungsgemäße Beschickungsvorrichtung erlaubt es, bis zu 2.000 Rohre pro Stunde zu befüllen, so dass auch ein großer Rohrbündelreaktor in ein bis zwei Tagen befüllbar ist, und so dass der bei manuellem Befüllen erforderliche Stillstand der Anlage von beispielsweise vier Wochen auf einen Tag reduziert werden kann.

## Patentansprüche

1. Beschickungsvorrichtung für Rohrbündelreaktoren (40), mit einer Dosierkammereinheit (18) mit einer Mehrzahl von Dosierkammern (14), die mit Füllmaterial wie z.B. katalytisch beschichtetem Trägermaterial befüllbar sind, wobei sich an jede Dosierkammer (14) ein Fallrohr (24) oder eine andere Zuführvorrichtung anschließt, über welches je ein Rohr (42) des Rohrbündelreaktors (40) befüllbar ist, und mit einer austauschbaren Vorkammereinheit (34), die eine Mehrzahl von Vorkammern (16) aufweist, wobei die Dosierkammer (14) je über Vorkammern (16) befüllbar sind, , **dadurch gekennzeichnet,**
- **dass** die Dosierkammereinheit (18) eine Wählvorrichtung (30) aufweist, über welche die auf die Dosierkammereinheit (18) aufzusetzende Vorkammereinheit (34) wählbar ist, und
- **dass** eine Codierung (32) zwischen der Vorkammereinheit (34) und der Dosierkammereinheit (18) vorgesehen ist, die in Abhängigkeit von der Stellung der Wählvorrichtung (30) ein Entleeren der Vorkammern (16) in die Dosierkammern (14) nur bei einer Übereinstimmung zwischen der Stellung der Wählvorrichtung (30) und der gewählten Vorkammereinheit (34) erlaubt.

2. Beschickungsvorrichtung nach Anspruch 1, **dadurch gekennzeichnet, dass** das Entleeren der Vorkammereinheit (34) in die Dosierkammereinheit (18) durch Betätigung eines Schieber (38) erfolgt, der zwischen der Vorkammereinheit (34) und der Dosierkammereinheit (18) vorgesehen ist.

3. Beschickungsvorrichtung nach Anspruche 1 oder 2, **dadurch gekennzeichnet, dass** die Vorkammereinheit (34) räumlich getrennt von den Dosierkammern (14) mit dem je gewünschten Füllmaterial befüllbar ist.

4. Beschickungsvorrichtung nach einem der vorhergehenden Ansprüche, **dadurch gekennzeichnet, dass** die Dosierkammern (14) einen Dosierausgang aufweisen, der zwischen einer Austraglippe (64) und einem Boden (56) der Dosierkammer (14) gebildet ist und. dass die Austragslippe (64) an der Dosierkammer (14) befestigt ist.

5. Beschickungsvorrichtung nach einem der vorhergehenden Ansprüche, **dadurch gekennzeichnet, dass** eine Austragslippe (64) an einem Dosierausgang für jede Dosierkammer (14) nach der Art einer Schürze aufgehängt ist.

6. Beschickungsvorrichtung nach Anspruch 5, **dadurch gekennzeichnet, dass** die Austragslippe (64) hinsichtlich ihrer Höhenlage einstellbar an der Dosierkammer (14) gelagert ist, wobei sie insbesondere zwischen 1 mm und 4 cm, bevorzugt zwischen 1 cm und 2 cm, oberhalb des Bodens (56) der Dosierkammer (14) endet.

7. Beschickungsvorrichtung nach einem der Ansprüche 5 und 6, **dadurch gekennzeichnet, dass** die Austragslippe (64) biegeschlaff ist.

8. Beschickungsvorrichtung nach einem der vorhergehenden Ansprüche, **dadurch gekennzeichnet, dass** die Dosierkammern (14) trichterförmig ausgebildet sind und einen schrägen Boden (56) aufweisen, und dass der Schrägstellungswinkel des Bodens 15° bis 60° gegenüber der Horizontalen, bevorzugt 45° bis 25° beträgt

9. Beschickungsvorrichtung nach Anspruch 8, **dadurch gekennzeichnet, dass** der Schrägstellungswinkel des Bodens etwa 35° gegenüber der Horizontalen beträgt.

10. Beschickungsvorrichtung nach einem der vorhergehenden Ansprüche, **dadurch gekennzeichnet, dass** eine Vielzahl Dosierkammern (14) und Zuführvorrichtungen oder Fallrohre (24) in einer Reihe (44) hintereinander angeordnet sind.

11. Beschickungsvorrichtung nach Anspruch 10, **dadurch gekennzeichnet, dass** mehr als 5 und weniger als 50 und bevorzugt etwa 20 Dosierkammern (14) und Zuführvorrichtungen oder Fallrohre (24) in einer Reihe (44) hintereinander angeordnet sind.

12. Beschickungsvorrichtung nach einem der vorhergehenden Ansprüche, **dadurch gekennzeichnet, dass** die Zuführvorrichtung (24) als Fallrohr (24) oder als Rutschschiene ausgebildet ist, deren Mündung kleiner als der Innendurchmessers eines Rohres (42) des Rohrbündelreaktors (40) ist.

13. Beschickungsvorrichtung nach einem der vorhergehenden Ansprüche, **dadurch gekennzeichnet, dass** die Fallrohre (24) weniger als 30 cm lang sind.

14. Beschickungsvorrichtung nach einem der vorhergehenden Ansprüche, **dadurch gekennzeichnet dass** die Fallrohre (24) 10 cm lang sind.

15. Beschickungsvorrichtung nach einem der vorhergehenden Ansprüche, **dadurch gekennzeichnet, dass** ein Rüttler (58) mindestens mit einem Boden (56) der Dosierkammern (14) verbunden ist, über welchen das Füllmaterial dem Dosierausgang zuführbar ist.

16. Beschickungsvorrichtung nach einem der vorhergehenden Ansprüche mit mindestens einer Vorkammereinheit, die mit der Dosierkammereinheit kombinierbar ist, **dadurch gekennzeichnet, dass** ein Antriebselement an der Dosierkammereinheit gelagert ist, das in mindestens ein Rohr des-Rohrbündelreaktors eingreift oder sich an einer Hinterschneidung auf der Oberfläche des Rohrbündelreaktors abstützt, und dass die Dosierkammereinheit sich über die Antriebsvorrichtung im Rastermaß der Rohre des Rohrbündelreaktors bewegt.

17. Verfahren zum Betrieb einer Beschickungsvorrichtung nach einem der Ansprüche 1 bis 16 für Rohrbündelreaktoren, wobei zunächst ein Füllmaterial in eine erste Vorkammereinheit eingebracht und dann über eine Dosierkammereinheit mit Dosierkammern einer Reihe von Rohren eines Rohrbündelreaktors zugeleitet wird und dann mindestens ein weiteres, anderes Füllmaterial in eine zweite, andere Vorkammereinheit eingebracht wird und über die gleichen Dosierkammern der gleichen Dosierkammereinheit in die Rohre eingeleitet wird, **dadurch gekennzeichnet, dass** in Abhängigkeit von der gewählten Vorkammereinheit unterschiedliche Füllhöhen in den Dosierkammern bereitgestellt werden.

18. Verfahren nach Anspruch 17, **dadurch gekennzeichnet, dass** die Vorkammereinheit austauschbar an der Dosierkammereinheit gelagert ist.

19. Verfahren nach Anspruch 17 oder 18, **dadurch gekennzeichnet, dass** der Vorkammereinheit als Füllmaterial Vollkatalysatormaterial oder katalytisch beschichtetes Trägermaterial zugeleitet wird.

20. Verfahren nach. einem der Ansprüche 17 bis 19, **dadurch gekennzeichnet, dass** den Vorkammereinheiten unterschiedliche Füllmaterialien zugeleitet- werden, zum Beispiel in Form von Ringen, Kugeln, Tabletten, gelochten Tabletten, Trilobes, gelochten Trilobes, Sternsträngen, Sterntabletten, Wagenrädern, Extrudaten, Pillen und Zylindern oder granulärem Material.

## Claims

1. A charging device for tube bundle reactors (40), with a metering chamber unit (18) having a plurality of metering chambers (14) which can be filled with filling materials such as, for example, catalytically coated carrier material, a drop tube (42) or some other feeding device via which one tube (42) of the tube bundle reactor (40) can be filled in each case being connected to each metering chamber (14), and with a replaceable antechamber unit (34), which includes a plurality of antechambers (16), the metering chambers (14) each being fillable via antechambers (16), **characterized in that**
the metering chamber unit (18) has a selector device (30) via which the antechamber unit (34) which is to be fitted onto the metering chamber unit (18) can be selected; and
an encoding means (32) is provided between the antechamber unit (34) and the metering chamber unit (18) which permits the antechamber unit (34) to be emptied into the metering chambers (14) as a function of the position of a selector device (30) only if there is correspondence between the position of the selector device (30) and the selected antechamber unit (34).

2. The charging device as claimed in claim 1, **characterized in that** discharging of the antechamber unit (34) into the metering chamber unit (18) is carried out by the activation of a slide (38) which is provided between the antechamber unit (34) and the metering chamber unit (18).

3. The charging device as claimed in claim 1 or 2, **characterized in that** the antechamber unit (34) can be filled with the respectively desired filling material while being spatially separated from the metering chambers (14).

4. The charging device as claimed in one of the preceding claims, **characterized in that** the metering chambers (14) have a metering outlet which is formed between an outlet lip (64) and a bottom (56) of the metering chamber (14), and wherein the outlet lip (64) is attached to the metering chamber (14).

5. The charging device as claimed in one of the preceding claims, **characterized in that** an outlet lip (64) is coupled to a metering outlet for each metering chamber (14) in the manner of an apron.

6. The charging device as claimed in claim 5, **characterized in that** the outlet lip (64) is mounted on the metering chamber (14) so as to be adjustable in terms of its vertical position, said outlet lip (64) ending in particular between 1 mm and 4 cm, preferably between 1 cm and 2 cm, above the bottom (56) of the metering chamber (14).

7. The charging device as claimed in claim 5 and 6, **characterized in that** the outlet lip (64) is flabby.

8. The charging device as claimed in one of the preceding claims, **characterized in that** the metering chambers (14) are of funnel shaped design and have an oblique bottom (56), and that the oblique position angle of the bottom is 15° to 60° with respect to the horizontal, preferably 45° to 25°.

9. The charging device as claimed in claim 8 wherein the oblique position angle of the bottom is approximately 35°.

10. The charging device as claimed in one of the preceding claims, **characterized in that** a plurality of metering chambers (14) and feed devices or drop tubes (24) are arranged one behind the other in a row (44).

11. The charging device as claimed in claim 10, **characterized in that** more than 5 and fewer than 50 and preferably approximately 20 metering chambers (14) and feed devices or drop tubes (24) are arranged one behind the other in a row (44).

12. The charging device as claimed in one of the preceding claims, **characterized in that** the feed device (24) is embodied as a drop tube (24) or as a sliding rail whose mouth is smaller than the internal diameter of a tube (42) of the tube bundle reactor (40).

13. The charging device as claimed in one of the preceding claims, **characterized in that** the drop tubes (24) are less than 30 cm long.

14. The charging device as claimed in one of the preceding claims, **characterized in that** the drop tubes (24) are 10 cm, long.

15. The charging device as claimed in one of the preceding claims, **characterized in that** a vibrator (58) is connected at least to a bottom (56) of the metering chambers (14) via which bottom the filling material can be fed to the metering outlet.

16. The charging device as claimed in one of the preceding claims, comprising at least a antechamber unit which can be combined with the metering chamber unit, **characterized in that** a drive device is mounted on the metering chamber unit which is adapted to engage in at least one tube of the tube bundle reactor or to be supported on an undercut on the surface of the tube bundle reactor and that the metering chamber unit moves by means of the drive device with the modular dimension of the tubes of the tube bundle reactor.

17. A method for operating a charging device for tube bundle reactors in accordance with any one of claims 1 to 16, **characterized in that** the filling material is firstly introduced into a first antechamber unit and is then fed to a series of tubes of a tube bundle reactor via a metering chamber unit with metering chambers, and then at least one further, different filling material is introduced into a second, different antechamber unit and is fed into the tubes via the same metering chambers of the same metering chamber unit, **characterized in that** different filling levels are provided in the metering chambers as a function of the selected antechamber unit.

18. The method of claim 17, **characterized in that** the antechamber unit is mounted on the metering chamber unit in a replaceable fashion.

19. The method of claim 17 or 18, **characterized in that** a filling material is fed as an unsupported catalytic material or as a catalytically coated carrier material to the antechamber unit.

20. The method of any one of claims 17 to 19, **characterized in that** different filling materials are fed to the antechambers, for example in the form of rings, balls, tablets, perforated tablets, trilobes, perforated trilobes, star shaped extrusions, star shaped tablets, wagon wheels, extrudates, pills and cylinders or granular material.

## Revendications

1. Dispositif de chargement pour réacteurs à faisceau de tubes (40), avec une unité de chambres de dosage (18) ayant une pluralité de chambres de dosages (14), qui peuvent être remplies d'une matériau de charge, comme par exemple un matériau support à revêtement catalytique, sachant qu'à chacune des chambres de dosage (14) se raccorde un tube de descente (24) ou un autre dispositif d'amenée, par l'intermédiaire duquel à chaque fois un tube (42) du réacteur à faisceau de tube (40) peut être rempli, et avec une unité de préchambres échangeable (34), qui présente une pluralité de préchambres (16), sachant que les chambres de dosage (14) peuvent être remplies chacune par l'intermédiaire des préchambres (16), **caractérisé en ce**
- **que** l'unité de chambres de dosage (18) présente un dispositif de sélection (30), grâce auquel on peut choisir l'unité de préchambres (34) à placer sur l'unité de chambres de dosage (18), et
- **que** l'on prévoit un codage (32) entre l'unité de préchambres (34) et l'unité de chambres de dosage (18), qui ne permet, en fonction de la position du dispositif de sélection (30), une vidange des préchambres (16) dans les chambres de dosages (14) qu'en cas d'accord entre la position du dispositif de sélection (30) et de l'unité de préchambres (34) sélectionné.

2. Dispositif de chargement selon la revendication 1, **caractérisé en ce que** la vidange de l'unité de préchambres (34) dans l'unité de chambres de dosages (18) se fait par actionnement d'un coulisseau (38) qui est prévu entre l'unité de préchambres (34) et l'unité de chambres de dosages (18).

3. Dispositif de chargement selon la revendication 1 ou 2, **caractérisé en ce que** l'unité de préchambres (34) séparée spatialement des chambres de dosage (14) peut être remplie avec à chaque fois le matériau de charge souhaité.

4. Dispositif de chargement selon l'une quelconque des revendications précédentes, **caractérisé en ce que** les chambres de dosages (14) présentent une sortie de dosage, qui est formée entre une lèvre de décharge (64) et un fond (56) de la chambre de dosage (14) et **en ce que** la lèvre de décharge (64) est fixée à la chambre de dosage (14).

5. Dispositif de chargement selon l'une quelconque des revendications précédentes, **caractérisé en ce qu'**une lèvre de décharge (64) est suspendue à la manière d'un tablier à une sortie de dosage pour chaque chambre de dosage (14).

6. Dispositif de chargement selon la revendication 5, **caractérisé en ce que** la lèvre de décharge (64) est logée pour ce qui est de sa situation en terme de hauteur d'une manière réglable sur la chambre de dosage (14), sachant qu'elle se termine, en particulier, à entre 1 mm et 4 cm, de préférence, à entre 1 cm et 2 cm au-dessus du fond (56) de la chambre de dosage (14).

7. Dispositif de chargement selon l'une quelconque des revendications 5 et 6, **caractérisé en ce que** la lèvre de décharge (64) est souple.

8. Dispositif de chargement selon l'une quelconque des revendications précédentes, **caractérisé en ce que** les chambres de dosage (14) sont réalisées sous la forme d'entonnoirs et présentent un fond incliné (56) et **en ce que** l'angle d'inclinaison du fond est de 15 degrés à 60 degrés, de préférence, de 45 à 25 degrés par rapport à l'horizontale.

9. Dispositif de chargement selon la revendication 8, **caractérisé en ce que** l'angle d'inclinaison du fond est environ de 35 degrés par rapport à l'horizontale.

10. Dispositif de chargement selon l'une quelconque des revendications précédentes, **caractérisé en ce qu'**une pluralité de chambres de dosage (14) et de dispositifs d'amenée ou de tubes de descente (24) sont disposés en une rangée (44) les uns derrière les autres.

11. Dispositif de chargement selon la revendication 10, **caractérisé en ce que** plus de 5 et moins de 50 et, de préférence, environ 20 chambres de dosage (14) et dispositifs d'amenée ou tubes de descente (24) sont disposés en une rangée (44) les uns derrière les autres.

12. Dispositif de chargement selon l'une quelconque des revendications précédentes, **caractérisé en ce que** le dispositif d'amenée (24) est réalisé en tant que tube de descente (24) ou en tant que rail de glissement, dont l'embouchure est plus petite que le diamètre interne d'un tube (42) du réacteur à faisceau de tubes (40).

13. Dispositif de chargement selon l'une quelconque des revendications précédentes, **caractérisé en ce que** les tubes de descente (24) sont longs de moins de 30 cm.

14. Dispositif de chargement selon l'une quelconque des revendications précédentes, **caractérisé en ce que** les tubes de descente (24) sont longs de 10 cm.

15. Dispositif de chargement selon l'une quelconque des revendications précédentes, **caractérisé en ce qu'**un secoueur (58) est reliée au moins à un fond (56) des chambres de dosage (14), par l'intermédiaire duquel le matériau de charge peut être acheminé à la sortie de dosage.

16. Dispositif de chargement selon l'une quelconque des revendications précédentes, avec au moins une unité de préchambres, qui peut être combinée à une unité de chambres de dosage, **caractérisé en ce qu'**un élément d'entrainement est logé sur l'unité de chambres de dosage, qui s'engage dans au moins un tube du réacteur à faisceau de tubes ou s'appuie sur une contre-dépouille à la surface du réacteur à faisceau de tubes et **en ce que** l'unité de chambres de dosage se déplace grâce au dispositif d'entrainement dans la dimension de trame des tubes du réacteur à faisceau de tubes.

17. Procédé d'exploitation d'un dispositif de chargement selon l'une quelconque des revendications 1 à 16 pour des réacteurs à faisceau de tubes, sachant qu'un matériau de charge est tout d'abord introduit dans une première unité de préchambres et est ensuite conduit par l'intermédiaire d'une unité de chambres de dosage à chambres de dosage à une rangée de tubes d'un réacteur à faisceau de tubes et qu'alors au moins un autre matériau de charge différent est introduit dans une seconde unité de préchambres différente et est conduit dans les tubes à l'aide des mêmes chambres de dosage de la même unité de chambres de dosage, **caractérisé en ce que** l'on met à disposition en fonction de l'unité de préchambres choisie, dans les chambres de dosage, des hauteurs de chargement différentes.

18. Procédé selon la revendication 17, **caractérisé en ce que** l'unité de préchambres est logée d'une manière échangeable sur l'unité de chambres de dosage.

19. Procédé selon la revendication 17 ou 18, **caractérisé en ce que** l'on conduit à l'unité de préchambres, en tant que matériau de charge, un matériau de catalyseur complet ou un matériau support à revêtement catalytique.

20. Procédé selon l'une quelconque des revendications 17 à 19, **caractérisé en ce que** l'on conduit aux unités de préchambres des matériaux de charge différents, par exemple sous la forme d'anneaux, de billes, pastilles, pastilles perforées, trilobes, trilobes perforés, brins en forme d'étoile, pastilles en forme d'étoile, rondelles, extrudats, pilules et cylindres ou de matériau granulaire.
